(19) Europäisches Patentamt
European Patent Office
Office européen des brevets

(11) **EP 1 217 186 B1**

(12) **FASCICULE DE BREVET EUROPEEN**

(45) Date de publication et mention
de la délivrance du brevet:
**29.07.2015 Bulletin 2015/31**

(51) Int Cl.:
***F02B 23/06*** *(2006.01)*  ***F02B 23/10*** *(2006.01)*

(21) Numéro de dépôt: **01403279.1**

(22) Date de dépôt: **18.12.2001**

(54) **Moteur à injection directe pourvu d'un faible angle de nappe et procédés permettant d'utiliser un tel moteur**

Direkteinspritzbrennkraftmaschine mit kleinem Sprühwinkel und Verfahren zu ihrer Verwendung

Direct injection engine with small spray angle and methods of using such an engine

(84) Etats contractants désignés:
**AT BE CH CY DE DK ES FI FR GB GR IE IT LI LU MC NL PT SE TR**

(30) Priorité: **20.12.2000 FR 0016823**
**30.07.2001 FR 0110213**

(43) Date de publication de la demande:
**26.06.2002 Bulletin 2002/26**

(73) Titulaire: **Institut Français du Pétrole**
**92852 Rueil-Malmaison Cedex (FR)**

(72) Inventeurs:
• **Gatellier, Bertrand**
**92100 Boulogne (FR)**
• **Walter, Bruno**
**92000 Nanterre (FR)**

(56) Documents cités:
**EP-A- 0 661 432    DE-A- 3 327 998**
**DE-B- 1 055 873    US-A- 5 373 820**
**US-A- 5 906 183**

## Description

La présente invention concerne un moteur à combustion interne à injection directe et des procédés permettant d'utiliser un tel moteur.

L'état de l'art dans le domaine peut être illustré par les brevets suivants: EP 849448, EP 589178 (US 5363820), JP 10184362, JP 10184363, US 3945351, GB 2134181, DD 147386, US 5906183, US 5373820, EP 661432, DE 3327998.

Les développements des systèmes de combustion des moteurs à combustion interne doivent répondre aux demandes de réduction des émissions de polluants, d'augmentation du couple et de la puissance spécifique ainsi que de la réduction du bruit de combustion, tout en restant compatible avec les critères de tenue en endurance.

L'ingénieur dispose actuellement d'une large palette de modifications possibles pour atteindre ces objectifs.

Il peut changer, par exemple, des paramètres de conception ou de réglage, comme la forme de tout ou partie de la chambre de combustion, tel que le bol, aménagée dans la partie supérieure du piston, dans le but de faciliter le mélange air/carburant.

Il peut également changer le taux de compression, certains paramètres du système d'injection (pression, loi de commande, etc...) et des jets de carburants (nombre de trous, diamètre, etc.), le réglage de la suralimentation, le taux d'EGR (recirculation des gaz d'échappement) ou encore la température d'admission.

L'exemple le plus connu est l'amélioration du compromis : émissions de NOx/émissions de particules.

Le problème devient encore plus difficile à résoudre quand il faut tenir compte des critères de tenue en endurance.

C'est le cas par exemple, en ce qui concerne le carburant liquide ou les suies au voisinage des parois du cylindre, dont la présence, néfaste à la tenue du lubrifiant, dépend de l'angle de nappe de l'injecteur retenu, de la forme du bol ou encore du phasage et de la pression d'injection. Un ajustement de ces paramètres a malheureusement un effet néfaste sur la combustion entraînant une augmentation des émissions de polluants et/ou une réduction des performances à pleine charge et/ou une augmentation du bruit.

Les brevets EP 849448 ou EP 589178 ou US 5 373 820 A notamment, concernent des chambres de combustion pour moteur à combustion interne. Ces chambres de combustion sont délimitées sur un côté par la paroi supérieure du piston qui comprend une partie de forme conique ou tronconique, dénommée téton, pointant vers la tête du cylindre et de même axe que lui, au centre d'une cuvette circulaire ou bol. Le carburant est injecté par un injecteur multi-jets placé dans l'axe de chaque cylindre avec un angle de nappe très large de l'ordre de 140 à 160°. L'angle au sommet du téton est adapté à l'angle de nappe de l'injecteur de façon que les jets de carburant soient émis sensiblement suivant les pentes du cône puis déviés par elles et l'arrondi de la cuvette vers le haut du cylindre en se vaporisant sans jamais toucher les parois du cylindre et donc sans affecter leur lubrification. Pour que cet effet se produise, il faut bien entendu que les pistons soient assez proches de leur point mort haut (PMH). On ne dispose de ce fait que d'une faible latitude dans le choix des instants d'injection du carburant.

Cette latitude est un inconvénient non négligeable, car il est connu aussi que des injections de carburant précoces et tardives offrent de nombreux avantages. Ainsi, une injection pilote avant le point mort haut et l'injection principale, permet de réduire le bruit de combustion. La régénération des filtres à particules déclenchée, suivant la technique connue, par-augmentation de la température à l'échappement, nécessite une injection de carburant peu de temps avant l'ouverture des soupapes d'échappement. Une injection de carburant lors de la détente ou encore au cours de la phase échappement peut être utile également pour obtenir les conditions favorables à l'échappement pour régénérer les pièges à NOx. Comme les systèmes de combustion utilisent généralement des injecteurs à angle de nappe compris entre 140° et 160°, la plage de réglage de ces injections est réduite pour limiter les problèmes de dilution du lubrifiant par du carburant ou des suies.

Pour s'affranchir de cette limitation, la présente invention se propose d'utiliser un moteur développant une combustion s'accommodant de conditions d'injection très variées.

Le moteur à combustion interne à injection directe selon l'invention comprenant au moins un cylindre avec une tête de cylindre, un piston coulissant dans ce cylindre, des moyens d'admission et d'échappement de gaz, une chambre de combustion délimitée sur un côté par la face supérieure du piston comprenant un téton pointant vers la tête du cylindre et disposé au centre d'un bol concave, est caractérisé en ce qu'il comporte au moins un injecteur pour injecter du carburant avec un angle de nappe inférieur ou égal à $2\,Arctg\,\dfrac{CD}{2F}$ où

CD est le diamètre du cylindre et F la distance entre le point d'origine des jets de carburant issus de l'injecteur et la position du piston correspondant à un angle de vilebrequin de 50° par rapport au point mort haut (PMH).

L'utilisation d'un injecteur à angle de nappe relativement étroit permet une grande latitude dans le choix des instants d'injection de carburant tout en évitant les inconvénients liés à la dispersion large du carburant injecté, notamment en ce qui concerne le mouillage des parois du cylindre. Ce type d'injecteur se prête bien au mode de combustion dit homogène.

Suivant un mode de réalisation, l'angle au sommet du téton est choisi sensiblement en accord avec l'angle de nappe de l'injecteur et le bol est conformé pour que le carburant injecté soit dévié vers la tête du cylindre en suivant sa concavité vers l'extérieur du bol et vaporisé sans atteindre les parois du cylindre, pour toute position du piston jusqu'à ± 30° par rapport au point mort haut.

L'utilisation conjointe de l'injecteur à angle de nappe relativement étroit et d'un bol de forme particulière autorise un mode de fonctionnement traditionnel pour une injection de carburant près du point mort haut mais dans une fourchette angulaire plus grande que celle permise habituellement.

Avantageusement, l'angle de nappe de l'injecteur est choisi entre 0° et 120°.

Préférentiellement, l'angle de nappe de l'injecteur est choisi entre 40° et 100°.

L'angle au sommet du téton est choisi supérieur à l'angle de nappe d'une valeur comprise entre 0° et 30°.

Le téton présente une hauteur supérieure à au moins 40 % de la profondeur du bol, de préférence supérieure à au moins 60%.

Les jets de carburant issus de l'injecteur forment avec le flanc du téton un angle d'intersection de l'ordre de 5°.

Selon l'invention, le bol comprend un diamètre de bol BD, une profondeur de bol L, une première partie curviligne de rayon R1, une deuxième partie curviligne de rayon R2, un diamètre de fond de bol, une paroi latérale d'inclinaison $a_3$ et une longueur de coupe diamétrale Cb et les dimensions du bol satisfont à au moins l'une des conditions suivantes :

- le rapport BD/L est inférieur à 6 et de préférence inférieur à 4 ;
- le rapport BD/R1 est supérieur à 4 ;
- le rapport R2/R1 est compris entre 0,4 et 1 ;
- le rapport FD/BD est inférieur à 0,8 ;
- le rapport Cb/BD est inférieur à 2 ;
- l'angle d'inclinaison $a_3$ est inférieur à 45°.

L'angle d'inclinaison est négatif de manière à ce que le bol présente un col rentrant permettant de délimiter une section de sortie dudit bol.

Le col est situé à une hauteur inférieure à la hauteur totale du bol.

Les dimensions du bol satisfont à l'une des conditions suivantes :

- le rapport GD/BD est inférieur à 1 ;
- le rapport L2/L est inférieur à 1 ;
- le rapport S/V est inférieur à 0,1 mm$^{-1}$.

Le procédé selon l'invention pour améliorer la latitude de fonctionnement d'un moteur à combustion interne à injection directe comprenant au moins un cylindre, un piston coulissant dans ce cylindre, des moyens d'admission et d'échappement de gaz, une chambre de combustion délimitée sur un côté par la face supérieure du piston comprenant un téton pointant vers la tête du cylindre, au centre d'un bol, est caractérisé en ce qu'il consiste à injecter le carburant dans chaque cylindre par un injecteur à angle de nappe inférieur ou égal à

$$2 Arctg \frac{CD}{2F}$$

où CO est le diamètre du cylindre et F la distance entre le point d'origine des jets de carburant issus de l'injecteur et la position du piston correspondant à un angle de vilebrequin de 50° par rapport au point mort haut (PMH).

De manière avantageuse, on utilise un piston tel que l'angle au sommet du téton soit sensiblement en accord avec l'angle de nappe de l'injecteur, et un bol dont la paroi est conformée pour que le carburant injecté soit guidé vers l'extérieur de celle-ci et vaporisé sans atteindre les parois du cylindre, pour toute position du piston jusqu'à ± 30° par rapport au point mort haut.

Grâce à l'invention, il est permis d'éviter la présence de carburant liquide sur les parois du cylindre tout en offrant de larges possibilités de contrôle de la pollution et des performances des moteurs.

De manière avantageuse, le procédé peut consister :

- pour les faibles et moyennes charges, à injecter le carburant dans chaque cylindre par un injecteur à angle de nappe inférieur ou égal à $2 Arctg \frac{CD}{2F}$ où CD est le diamètre du cylindre et F la distance entre le point d'origine des jets de carburant issus de l'injecteur et la position du piston correspondant à un angle de vilebrequin de 50° par rapport au point mort haut (PMH) de façon à obtenir une durée importante du mélange du carburant avec l'air admis avant la combustion de ce mélange ;

- pour les fortes charges, à injecter le carburant par le même injecteur avec le même angle de nappe, de façon à obtenir un mélange stratifié du carburant avec l'air admis et une combustion progressive.

A pleine charge et aux charges élevées, le moteur selon l'invention permet un bon entraînement du carburant vapeur favorisant ainsi son mélange avec l'air afin d'obtenir une bonne vitesse de combustion et des richesses de fonctionnement élevées, traduisant une bonne utilisation de l'air admis. Aux charges partielles, un angle de nappe réduit permet une grande latitude dans les réglages du système d'injection en s'affranchissant du mouillage des parois du cylindre.

D'autres caractéristiques et avantages du système selon l'invention apparaîtront à la lecture de la description donnée ci-après à partir d'exemples non limitatifs de réalisation, en se référant aux dessins annexés où:

- la figure 1 montre schématiquement un moteur à combustion interne avec injecteur de carburant à nappe étroite et surface de piston à profil étudié pour offrir une plus grande latitude dans le choix des instants possibles d'injection ;

- la figure 2 est une vue locale partielle à grande échelle d'un profil modifié du bol du piston de la figure 1 ;
- la figure 3 illustre une vue locale partielle à grande échelle d'un autre profil du bol du piston ;
- les figures 4a à 4e modélisent différents stades de la combustion de carburant selon l'invention et pour un fonctionnement pleine charge.

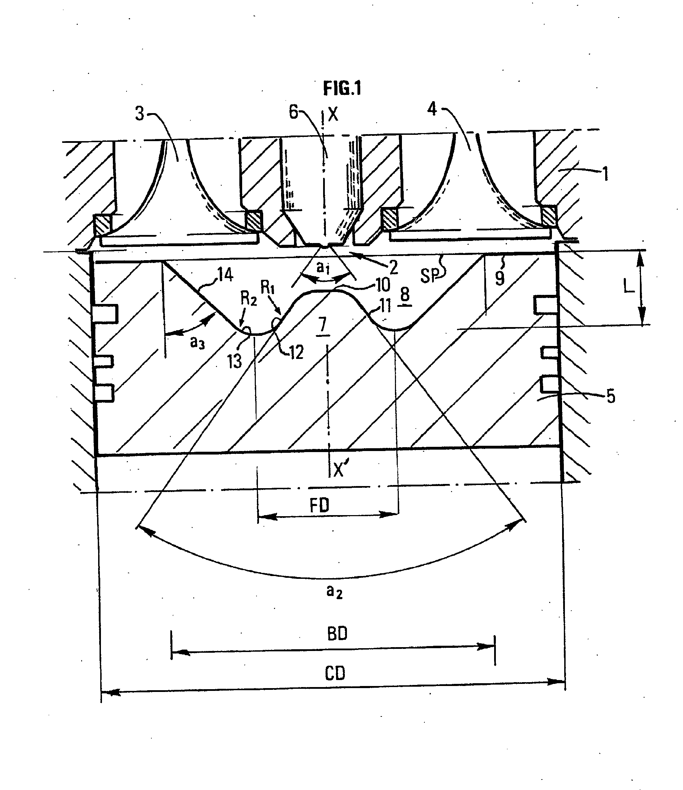

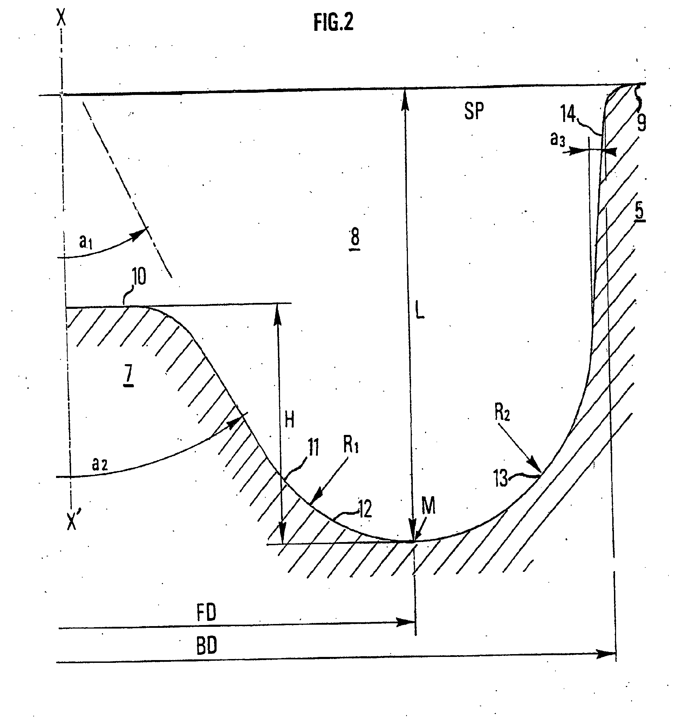

En se référant aux figures 1 et 2, un moteur à combustion interne à injecteur de carburant, par exemple dé type diesel, comprend au moins un cylindre 1 d'axe XX' avec une tête de cylindre 2, des moyens d'admission d'air et des moyens d'échappement des gaz brûlés, ici respectivement une ou plusieurs soupapes d'admission 3, une ou plusieurs soupapes d'échappement 4, un piston 5 coulissant dans le cylindre 1 et un injecteur de carburant 6, tel qu'un injecteur multi-jets, de préférence disposé dans l'axe XX' du cylindre.

Bien entendu, il peut être prévu que l'injecteur ne soit pas disposé dans l'axe XX', mais, dans ce cas, l'axe général de la nappe de jets de carburant issus de cet injecteur de carburant est coaxial à cet axe XX'.

L'injecteur de carburant est de type à faible angle de nappe a, et on choisit un angle de nappe $a_1$ au plus de 120° et préférentiellement entre 40° et 100°.

Cet angle de nappe est choisi pour que les parois du cylindre ne soient jamais mouillées par le carburant pour toute position du piston comprise entre + 50° et +$\alpha$ ou entre -50° et -$\alpha$, où $\alpha$ représente l'angle du vilebrequin pour la phase d'injection choisie par rapport au point mort haut (PMH), cet angle $\alpha$ étant supérieur à 50° et inférieur ou égal à 180° pour obtenir une combustion de type homogène.

Si CD désigne le diamètre du cylindre 1 et F la distance entre le point d'origine des jets de l'injecteur 6 et la position du piston correspondante à un angle de vilebrequin de 50°, alors l'angle de nappe $a_1$ sera inférieur ou égal à $2\,Arctg\,\dfrac{CD}{2F}$ .

Une fourchette angulaire typique pour l'angle de nappe $a_1$ est par exemple comprise entre 40° et 100°.

Ainsi, grâce à l'invention, il est possible d'obtenir une grande latitude dans le choix des instants d'injection car l'injecteur tel que défini permettra d'obtenir une nappe de jets de carburant qui ne mouillera pas les parois du cylindre pour une injection comprise entre les positions du piston correspondant à un angle de vilebrequin compris entre 50° et +$\alpha$ ou entre -50° et -$\alpha$, où $\alpha$ représente l'angle du vilebrequin pour la phase d'injection choisie par rapport au point mort haut (PMH), cet angle $\alpha$ étant supérieur à 50° et inférieur ou égal à 180°.

En effet, comme cela a été montré à maintes reprises, la nappe de carburant a une configuration selon laquelle elle est issue de l'injecteur, selon une section axiale, en forme de triangle et se termine, toujours selon une section axiale, en forme de demi-cercle dont le diamètre est égal à la base du triangle.

La chambre de combustion est délimitée d'un côté par la tête de cylindre 2 et du côté opposé, par la face supérieure SP du piston 5.

Cette face comporte un téton 7 d'axe coaxial avec l'axe de la nappe de carburant issu de l'injecteur 6 et s'érige vers la tête du cylindre 2 en se situant au centre d'une cuvette ou bol 8 d'axe également coaxial avec l'axe de la nappe de jets de carburant issue de l'injecteur 6. La concavité de ce bol est tournée vers cette tête de cylindre 2 et débouche sur une partie sensiblement horizontale 9 dudit piston.

Bien entendu, il peut être prévu que l'axe du bol ne soit pas coaxial avec celui du cylindre mais l'essentiel réside dans la disposition selon laquelle l'axe de la nappe de jets de carburant, l'axe du téton et l'axe du bol soient coaxiaux.

Ce téton de forme tronconique comporte un sommet 10 sensiblement horizontal se poursuivant, en direction du fond du bol, par un flanc 11 sensiblement rectiligne. L'angle au sommet $a_2$ du téton 7 est adapté sensiblement à l'angle de nappe $a_1$ de l'injecteur 6, de façon que le carburant soit injecté sensiblement le long du flanc 11 du téton lorsque le piston se trouve au voisinage du point mort haut (PMH).

La section diamétrale du bol 8 est curviligne et comprend, depuis le haut du téton 7 en s'écartant symétriquement vers l'extérieur du piston 5, de part et d'autre de son axe (ici confondu avec l'axe XX'), le sommet 10 du téton avec un raccordement courbe pour la partie rectiligne formée par le flanc 11, ce flanc se poursuivant par une première partie curviligne 12 de rayon de courbure R1, une deuxième partie curviligne 13 de rayon de courbure R2 et se terminant par une paroi latérale 14 inclinée sensiblement rectiligne rejoignant la partie sensiblement horizontale 9 de la face supérieure SP du piston 5.

On désigne par L, la profondeur du bol 8, par BD, le diamètre de l'ouverture du bol, par CD, le diamètre du cylindre, par $\dfrac{C_b}{2}$, la longueur de la demi-coupe diamétrale du bol 8 depuis le sommet du téton 7, considéré à l'intersection de ce sommet avec l'axe passant par la nappe de jets de carburant (ici l'axe XX'), jusqu'à son raccordement avec la face supérieure du piston 5 (la longueur développée de la coupe diamétrale du bol est par conséquent Cb), par $a_3$, l'angle que fait la paroi 14 du bol par rapport à une verticale, ici une droite parallèle à l'axe XX' qui, dans l'exemple de cette figure, correspond également à une droite parallèle à l'axe des jets de l'injecteur 6, et par FD le diamètre moyen du bol 8 considéré au fond de celui-ci. Dans le cas de le figure 1, le diamètre FD sera considéré au point M le plus bas du bol, c'est à dire à l'intersection entre les rayons R1 et R2. Dans la configuration selon laquelle le point le plus bas du bol serait une zone plane, le diamètre FD serait à considérer comme le diamètre pris à la médiatrice de cette zone plane.

La forme du bol 8 est compatible avec l'angle de nappe $a_1$ que l'on choisit. Elle est adaptée pour que, dans le mode de fonctionnement de type traditionnel (pour toute position du piston 5 jusqu'à $\pm$ 30° par rapport au point mort haut (PMH) par exemple), on obtient l'effet recherché de déviation du carburant injecté vers la tête du cylindre (en suivant sa concavité vers l'extérieur du bol) et sa vaporisation sans qu'il puisse aller mouiller les parois du cylindre.

Cette forme est obtenue en respectant les conditions suivantes :

- le rapport BD/L est inférieur à 6 et de préférence inférieur à 4 ;
- le rapport BD/R1 est supérieur à 4 ;
- le rapport R2/R1 est compris entre 0,4 et 1 ;
- le rapport FD/BD est inférieur à 0,8 ;
- le rapport Cb/BD est inférieur à 2.

Pour $a_3$, on choisit un angle inférieur à 45° (figure 1) et de manière avantageuse sensiblement égale à 20° comme illustré sur la figure 2.

De manière avantageuse, la hauteur H du téton 7, hauteur considérée au fond du bol 8 jusqu'au sommet 10, est inférieure à la profondeur L du bol 8. Ainsi, lors de l'injection du carburant, les jets de ce carburant se mélangeront le long du flanc 11 avec l'air (ou un mélange d'air et de gaz d'échappement recirculés) préalablement admis dans la chambre de combustion puis seront guidés par les parties 12 et 13 associées à la paroi 14 de telle manière qu'ils ne puissent pas venir en contact avec les parois du cylindre 1.

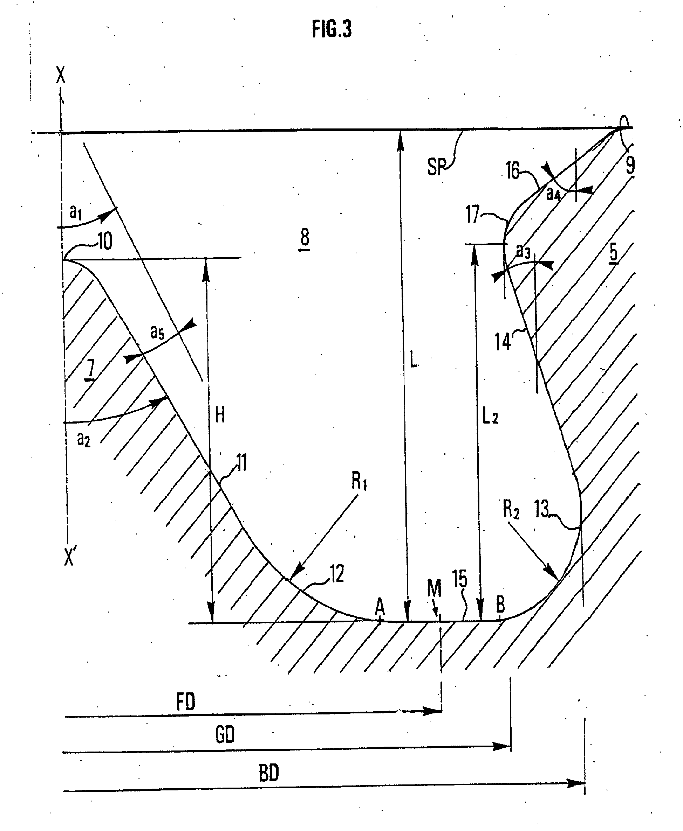

On se réfère maintenant à la figure 3 qui montre un autre exemple de réalisation d'un profil de bol que contient le piston 5.

Le piston 5 d'axe XX' comprend un bol 8 dont la concavité est tournée vers la tête de cylindre (non représentée) et qui comprend un téton 7.

Le téton, qui se situe au centre du bol 8 et qui est également coaxial à l'axe de la nappe des jets de carburant, présente une forme plus effilée que celle montrée aux figures 1 et 2 en ayant une forme conique dont le sommet 10 est légèrement arrondi et dont la surface de base est plus petite que celle des figures 1 et 2.

Ce sommet se poursuit par un flanc 11 sensiblement rectiligne en direction du fond du bol puis par une première partie 12 curviligne de rayon de courbure R1, une paroi plane 15 sensiblement horizontale formant le fond du bol, une deuxième partie curviligne 13 de rayon de courbure R2, une paroi inclinée 14 formant la paroi latérale de bol et une surface inclinée 16 raccordée à la paroi 14 par un congé 17, ladite surface inclinée 16 aboutissant à la partie horizontale 9 de la face supérieure SP du piston 5.

La longueur de la coupe diamétrale Cb sera donc constituée par le doublement de la longueur depuis l'intersection du sommet 10 du téton 7 avec l'axe géométrique du téton, qui est dans le cas de la figure confondu avec l'axe XX', jusqu'au raccordement de la surface inclinée 16 avec la face supérieure du piston 5.

Dans l'exemple de la figure 3, l'angle au sommet $a_2$ du téton est adapté à l'angle de nappe $a_1$ de manière à ce que le carburant soit injecté sensiblement le long du flanc 11 et ce téton présente une hauteur H qui est supérieure à au moins 40% de la profondeur L du bol 8, profondeur considérée entre la partie horizontale 9 du piston 5 et la paroi de fond 15, cette hauteur étant supérieure, dans l'exemple de la figure 3, à 60% de la profondeur du bol.

L'angle $a_3$ que forme la paroi latérale 14 du bol avec une verticale, considéré entre le congé 17 et la partie curviligne 13, est sensiblement identique à celui décrit en relation avec les figures 1 et 2 mais a la particularité d'être négatif, c'est à dire considéré dans le sens contraire à celui des figures 1 et 2.

Ainsi la paroi latérale 14 forme un ré-entrant à la sortie du bol 8, réentrant qui fait apparaître un col 17 formé par le congé entre la paroi 14 et la surface 16 qui est inclinée d'un angle $a_4$ formé par une verticale passant par un des points de cette surface, cet angle $a_4$ étant préférentiellement supérieur à 5°.

Le bol de la figure 3 présente donc :

- un diamètre d'ouverture de bol BD, avec un rayon considéré au voisinage du fond du bol et correspondant à une distance prise entre l'axe XX' et le point le plus éloigné de la deuxième partie curviligne 13,
- un diamètre de fond de bol FD dont le rayon correspond à une distance entre l'axe XX' et un point M milieu du segment de droite AB délimitant le fond du bol formé par la paroi plane 15,
- un diamètre de col GD avec un rayon qui correspond à la distance entre l'axe XX' et l'extrémité du col 17 faisant face au téton 7 et qui va délimiter la section de sortie de ce bol,
- une profondeur de col L2 considérée au diamètre de col GD et s'étendant du col 17 jusqu'à la paroi de fond 15.

Cette autre forme du profil du bol respecte également les conditions de rapport tels qu'énumérées ci-dessus auxquelles sont ajoutés les rapports selon lesquelles L2/L est inférieur à 1, la section S de sortie du bol (considéré au diamètre GD) divisée par le volume total V du bol est inférieur à 0,1 mm$^{-1}$ et GD/BD est inférieur 1.

Préférentiellement, il est prévu que le rapport SN soit environ égale à 0,05 mm$^{-1}$.

Comme mieux visible sur la figure 3, le diamètre GD de col est inférieur au diamètre de bol BD ce qui permet de restreindre la section de sortie considérée au diamètre GD et autoriser ainsi une vitesse de déplacement du mé-

9     **EP 1 217 186 B1**     10

lange carburé plus importante. De plus, l'inclinaison négative de l'angle $a_3$ a l'avantage d'orienter les jets de carburant vers l'axe XX' et ainsi éviter le contact du carburant avec les parois du cylindre.

De plus, la hauteur H importante du téton 7 permet de mieux séparer les jets de carburant issus de l'injecteur et de mieux dégager ces jets dans leur partie vapeur car le volume d'air compris entre le flanc 11 du téton et les jets de carburant est plus important.

Préférentiellement, il est prévu que les jets de carburant forment avec le flanc 11 un angle d'intersection $a_5$ de l'ordre de 5°.

Bien entendu, la présente invention n'est pas limitée aux exemples de réalisation décrits ci-dessus mais peut être utilisée dans un procédé utilisant un moteur qui permette, pour les faibles et moyennes charges, l'injection du carburant dans chaque cylindre par un injecteur à angle de nappe $a_1$ tel que défini précédemment de façon que les jets de carburant ne touchent pas les parois du cylindre 1, pour toute position du piston 5 comprise entre + 50° et +$\alpha$° ou entre -50° et -$\alpha$ par rapport au point mort haut (où $\alpha$ est, comme précédemment décrit, supérieur à 50° et inférieur ou égal à 180°) de façon à obtenir une durée importante du mélange du carburant avec l'air admis avant la combustion de ce mélange et, pour les fortes charges, l'injection du carburant par le même injecteur avec le même angle de nappe, de façon à obtenir un mélange stratifié du carburant avec l'air admis et une combustion progressive.

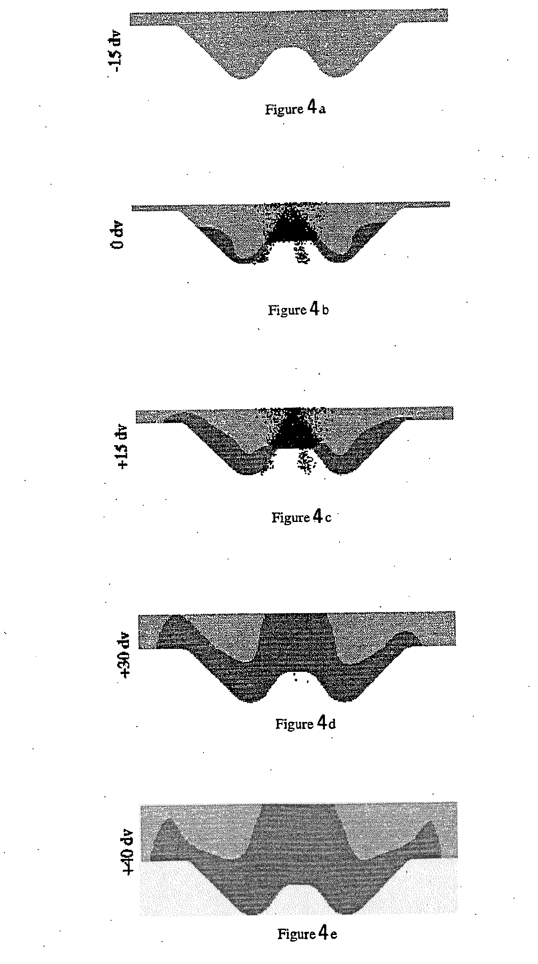

A titre d'exemple, on vérifie sur les figures 4a à 4e qui modélisent différents stades de la combustion à pleine charge (entre -15°V et +40°V), que le carburant injecté est bien guidé le long des concavités du bol.

Sur ces figures, ce qui est en noir représente le carburant injecté, ce qui est en grisé plus clair représente l'air, et ce qui est en grisé sombre représente un mélange d'air et de carburant vaporisé.

## Revendications

**1.** Moteur à combustion interne à injection directe comprenant au moins un cylindre (1) avec une tête de cylindre (2), un piston (5) coulissant dans ce cylindre, des moyens (3, 4) d'admission et d'échappement de gaz, une chambre de combustion délimitée sur un côté par la face supérieure (SP) du piston (5) comprenant un téton (7) pointant vers la tête (2) du cylindre et disposé au centre d'un bol concave (8), le bol comprenant un diamètre de bol BD, une profondeur de bol L, une première partie curviligne (12) de rayon R1, une deuxième partie curviligne (13) de rayon R2, un diamètre de fond de bol FD, une paroi latérale (14) d'inclinaison $a_3$ et une longueur de coupe diamétrale Cb, en ce que le moteur comporte au moins un injecteur (6) pour injecter du carburant avec un angle de nappe ($a_1$) inférieur ou égal à

$$2\,Arctg\,\frac{CD}{2F}$$ où CD est le diamètre du cylindre (2) et F la distance entre le point d'origine des jets de carburants issus de l'injecteur (6) et la position du piston correspondant à un angle de vilebrequin de 50° par rapport au point mort haut (PMH) et **caractérisé en ce que** les dimensions du bol satisfont aux conditions suivantes :

- le rapport BD/L est inférieur à 6 et de préférence inférieur à 4 ;
- le rapport BD/R1 est supérieur à 4 ;
- le rapport R2/R1 est compris entre 0,4 et 1 ;
- le rapport FD/BD est inférieur à 0,8 ;
- le rapport Cb/BD est inférieur à 2 ;
- l'angle d'inclinaison $a_3$ est inférieur à 45°.

**2.** Moteur selon la revendication 1, **caractérisé en ce que** l'angle au sommet ($a_2$) du téton (7) est choisi sensiblement en accord avec l'angle de nappe ($a_1$) de l'injecteur (6) et le bol (8) est conformé pour que le carburant injecté soit dévié vers la tête du cylindre en suivant sa concavité vers l'extérieur du bol et vaporisé sans atteindre les parois du cylindre, pour toute position du piston (5) jusqu'à $\pm$ 30° par rapport au point mort haut (PMH).

**3.** Moteur selon la revendication 1 ou 2, **caractérisé en ce que** l'angle de nappe ($a_1$) de l'injecteur (6) est choisi entre 0° et 120°.

**4.** Moteur selon la revendication 1 ou 2, **caractérisé en ce que** l'angle de nappe ($a_1$) de l'injecteur (6) est choisi entre 40° et 100°.

**5.** Moteur selon la revendication 3 ou 4, **caractérisé en ce que** l'angle au sommet ($a_2$) du téton (7) est choisi supérieur à l'angle de nappe ($a_1$) d'une valeur comprise entre 0° et 30°.

**6.** Moteur selon l'une des revendications précédentes, **caractérisé en ce que** le téton (7) présente une hauteur supérieure à au moins 40 % de la profondeur du bol (8).

**7.** Moteur selon l'une des revendications 1 à 5, **caractérisé en ce que** le téton (7) présente une hauteur supérieure à au moins 60 % de la profondeur du bol (8).

**8.** Moteur selon l'une des revendications précédentes, **caractérisé en ce que** les jets de carburant issus de l'injecteur (6) forment avec le flanc (11) du téton (7) un angle d'intersection $a_5$ de l'ordre de 5°.

**9.** Moteur selon la revendication 1, **caractérisé en ce que** l'angle d'inclinaison $a_3$ est négatif de manière à

**6**

ce que le bol présente un col rentrant (17) permettant de délimiter un diamètre de sortie (GD) dudit bol.

10. Moteur selon la revendication 9, **caractérisé en ce que** le col (17) est situé à une hauteur (L2) inférieure à la hauteur totale du bol.

11. Moteur selon l'une des revendications 9 ou 10 pris en combinaison avec la revendication 1, **caractérisé en ce que** les dimensions du bol satisfont à l'une des conditions suivantes :

   - le rapport GD/BD est inférieur à 1
   - le rapport L2/L est inférieur à 1
   - le rapport SN est inférieur à 0,1 mm$^{-1}$ où S est la section de sortie considérée au diamètre GD et V le volume total du bol.

12. Procédé pour améliorer la latitude de fonctionnement d'un moteur à combustion interne à injection directe selon l'une des revendications précédentes comprenant au moins un cylindre (1), un piston (5) coulissant dans ce cylindre, des moyens (3, 4) d'admission et d'échappement de gaz, une chambre de combustion délimitée sur un côté par la face supérieure du piston (5) comprenant un téton (7) pointant vers la tête (2) du cylindre, au centre d'une cuvette ou bol (8), **caractérisé en ce qu'**il consiste :

   - pour les faibles et moyennes charges, à injecter le carburant dans chaque cylindre par un injecteur à angle de nappe ($a_1$) inférieur ou égal

$$\text{à } 2Arctg\frac{CD}{2F}$$ où CD est le diamètre du cylindre (2) et F la distance entre le point d'origine des jets de carburant issus de l'injecteur (6) et la position du piston correspondant à un angle de vilebrequin de 50° par rapport au point mort haut (PMH) de façon à obtenir une durée importante du mélange du carburant avec l'air admis avant la combustion de ce mélange ;
   - pour les fortes charges, à injecter le carburant par le même injecteur avec le même angle de nappe, de façon à obtenir un mélange stratifié du carburant avec l'air admis et une combustion progressive.

**Patentansprüche**

1. Brennkraftmaschine mit Direkteinspritzung, die mindestens einen Zylinder (1) mit einem Zylinderkopf (2), einem Kolben (5), der in diesem Zylinder gleitet, Mitteln (3, 4) zum Einlassen und Auslassen von Gas, einer Brennkammer, die auf einer Seite von der Oberseite (SP) des Kolbens (5) begrenzt ist, der einen Zapfen (7), der zu dem Kopf (2) des Zylinders zeigt und in der Mitte einer konkaven Schale (8) angeordnet ist, aufweist, wobei die Schale einen Schalendurchmesser BD, eine Schalentiefe L, einen ersten gebogenen Teil (12) mit Radius R1, einen zweiten gebogenen Teil (13) mit Radius R2, einen Schalengrunddurchmesser FD, eine seitliche Wand (14) mit Neigung $a_3$ und eine diametrale Schnittlänge Cb aufweist, **dadurch gekennzeichnet, dass** der Motor mindestens eine Einspritzdüse (6) zum Einspritzen des Kraftstoffs mit einem Mantelwinkel ($a_1$) kleiner oder gleich $2Arctg\dfrac{CD}{2F}$ aufweist, wobei CD der Durchmesser des Zylinders (2) ist und F die Entfernung zwischen dem Ursprungspunkt der Kraftstoffstrahlen, die aus der Einspritzdüse (6) stammen, und der Position des Kolbens, die einem Kurbelwinkel von 50° in Bezug auf den oberen Totpunkt (PMH) entspricht, ist, und **dadurch gekennzeichnet, dass** die Abmessungen der Schale die folgenden Bedingungen erfüllen:

   - das Verhältnis BD/L ist kleiner als 6 und vorzugsweise kleiner als 4,
   - das Verhältnis BD/R1 ist größer als 4,
   - das Verhältnis R2/R1 liegt zwischen 0,4 und 1,
   - das Verhältnis FD/BD ist kleiner als 0,8,
   - das Verhältnis Cb/BD ist kleiner als 2,
   - der Neigungswinkel $a_3$ ist kleiner als 45°.

2. Brennkraftmaschine nach Anspruch 1, **dadurch gekennzeichnet, dass** der Winkel auf dem Scheitel ($a_2$) des Zapfens (7) im Wesentlichen in Übereinstimmung mit dem Mantelwinkel ($a_1$) der Einspritzdüse (6) ausgewählt ist, und die Schale (8) gestaltet ist, damit der eingespritzte Kraftstoff zu dem Zylinderkopf entlang ihrer Konkavität zu dem Äußeren der Schale abgelenkt und, ohne die Wände des Zylinders zu erreichen, für jede Position des Kolbens (5) bis ± 30° in Bezug auf den oberen Totpunkt (PMH) zerstäubt wird.

3. Brennkraftmaschine nach Anspruch 1 oder 2, **dadurch gekennzeichnet, dass** der Mantelwinkel ($a_1$) der Einspritzdüse (6) zwischen 0° und 120° ausgewählt ist.

4. Brennkraftmaschine nach Anspruch 1 oder 2, **dadurch gekennzeichnet, dass** der Mantelwinkel ($a_1$) der Einspritzdüse (6) zwischen 40° und 100° ausgewählt ist.

5. Brennkraftmaschine nach Anspruch 3 oder 4, **dadurch gekennzeichnet, dass** der Winkel auf dem Scheitel ($a_2$) des Zapfens (7) um einen Wert zwischen 0° und 30° größer ausgewählt ist als der Man-

telwinkel ($a_1$).

6.  Brennkraftmaschine nach einem der vorhergehenden Ansprüche, **dadurch gekennzeichnet, dass** der Zapfen (7) eine Höhe größer als mindestens 40 % der Tiefe der Schale (8) aufweist.

7.  Brennkraftmaschine nach einem der Ansprüche 1 bis 5, **dadurch gekennzeichnet, dass** der Zapfen (7) eine Höhe größer als mindestens 60 % der Tiefe der Schale (8) aufweist.

8.  Brennkraftmaschine nach einem der vorhergehenden Ansprüche, **dadurch gekennzeichnet, dass** die Kraftstoffsstrahlen, die aus der Einspritzdüse (6) stammen, mit der Flanke (11) des Zapfens (7) einen Schnittwinkel $a_5$ in der Größenordnung von 5° bilden.

9.  Brennkraftmaschine nach Anspruch 1, **dadurch gekennzeichnet, dass** der Neigungswinkel $a_3$ derart negativ ist, dass die Schale einen zurücktretenden Kragen (17) aufweist, der es erlaubt, einen Ausgangsdurchmesser (GD) der Schale abzugrenzen.

10.  Brennkraftmaschine nach Anspruch 9, **dadurch gekennzeichnet, dass** der Kragen (17) in einer Höhe (L2) liegt, die kleiner ist als die Gesamthöhe der Schale.

11.  Brennkraftmaschine nach einem der Ansprüche 9 oder 10, kombiniert genommen mit Anspruch 1, **dadurch gekennzeichnet, dass** die Maße der Schale eine der folgenden Bedingungen erfüllen:

    - das Verhältnis GD/BD ist kleiner als 1
    - das Verhältnis L2/L ist kleiner als 1
    - das Verhältnis S/V ist kleiner als 0,1 $mm^{-1}$, wobei S der am Durchmesser GD betrachtete Ausgangsquerschnitt und V das Gesamtvolumen der Schale ist.

12.  Verfahren zum Verbessern der Funktionsmöglichkeit einer Brennkraftmaschine mit Direkteinspritzung nach einem der vorhergehenden Ansprüche, die mindestens einen Zylinder (1) aufweist, wobei ein Kolben (5) in diesem Zylinder gleitet, Mittel (3, 4) zum Einlassen und Auslassen von Gas, eine Brennkammer, die auf einer Seite von der Oberseite des Kolbens (5) abgegrenzt ist, die einen Zapfen (7) umfasst, der zu dem Kopf (2) des Zylinders zeigt, in der Mitte einer Wanne oder Schale (8), **dadurch gekennzeichnet, dass** es aus Folgendem besteht:

    - für geringe und mittlere Lasten, Einspritzen des Kraftstoffs in jeden Zylinder durch eine Einspritzdüse mit Mantelwinkel ($a_1$), der kleiner

oder gleich $2Arctg\dfrac{CD}{2F}$ ist, wobei CD der Durchmesser des Zylinders (2) und F die Entfernung zwischen dem Ursprungspunkt der Kraftstoffstrahlen, die aus der Einspritzdüse (6) stammen, und der Position des Kolbens ist, die einem Kurbelwinkel von 50° in Bezug auf den oberen Totpunkt (PMH) entspricht, so dass eine große Dauer des Mischens des Kraftstoffs mit der eingelassenen Luft vor der Verbrennung dieses Gemischs erzielt wird,

- für größere Lasten, Einspritzen des Kraftstoffs durch dieselbe Einspritzdüse mit demselben Mantelwinkel derart, dass ein geschichtetes Gemisch des Kraftstoffs mit der eingelassenen Luft und eine allmähliche Verbrennung erzielt werden.

**Claims**

1.  A direct-injection internal-combustion engine comprising at least one cylinder (1) with a cylinder head (2), a piston (5) sliding in this cylinder, gas intake and exhaust means (3, 4), a combustion chamber delimited on one side by the upper face (SP) of piston (5) comprising a teat (7) pointing towards cylinder head (2) and arranged at the centre of a concave bowl (8), the bowl comprising a bowl diameter BD, a bowl depth L, a first curvilinear part (12) of radius R1, a second curvilinear part (13) of radius R2, a bowl bottom diameter FD, a lateral wall (14) of inclination $a_3$ and a diametral cut length Cb, **characterized in that** the engine comprises at least one injector (6) for injecting fuel with a nappe angle ($a_1$) less

    than or equal to $2Arctg\dfrac{CD}{2F}$, where CD is the diameter of cylinder (2) and F the distance between the point of origin of the fuel jets from injector (6) and the position of the piston corresponding to a crank angle of 50° to the top dead centre (TDC), and **characterized in that** the dimensions of the bowl meet the following conditions:

    - ratio BD/L is below 6 and preferably below 4,
    - ratio BD/R1 is above 4,
    - ratio R2/R1 ranges between 0.4 and 1,
    - ratio FD/BD is below 0.8,
    - ratio Cb/BD is below 2,
    - angle of inclination $a_3$ is below 45°.

2.  An engine as claimed in claim 1, **characterized in that** apex angle ($a_2$) of teat (7) is selected substantially in accordance with nappe angle ($a_1$) of injector (6) and bowl (8) is so shaped that the injected fuel is deflected toward the cylinder head along the concavity thereof towards the outside of the bowl and vaporized without reaching the cylinder walls, for any position of piston (5) up to ± 30° to the top dead centre (TDC).

3. An engine as claimed in claim 1 or 2, **characterized in that** nappe angle ($a_1$) of injector (6) is selected between 0° and 120°.

4. An engine as claimed in claim 1 or 2, **characterized in that** nappe angle ($a_1$) of injector (6) is selected between 40° and 100°.

5. An engine as claimed in claim 3 or 4, **characterized in that** apex angle ($a_2$) of teat (7) is selected greater than nappe angle ($a_1$) by a value ranging between 0° and 30°.

6. An engine as claimed in any one of the previous claims, **characterized in that** the height of teat (7) is greater than at least 40 % of the depth of bowl (8).

7. An engine as claimed in any one of claims 1 to 5, **characterized in that** the height of teat (7) is greater than at least 60 % of the depth of bowl (8).

8. An engine as claimed in any one of the previous claims, **characterized in that** the fuel jets from injector (6) form, with flank (11) of teat (7), an angle of intersection $a_5$ of the order of 5°.

9. An engine as claimed in claim 1, **characterized in that** angle of inclination $a_3$ is negative so that the bowl has a reentrant neck (17) allowing to delimit an outlet diameter (GD) of said bowl.

10. An engine as claimed in claim 9, **characterized in that** neck (17) is located at a height (L2) below the total height of the bowl.

11. An engine as claimed in any one of claims 9 or 10 in combination with claim 1, **characterized in that** the dimensions of the bowl meet one of the following conditions:

    - ratio GD/BD is below 1,
    - ratio L2/L is below 1,
    - ratio S/V is below 0.1 mm$^{-1}$, where S is the outlet section considered at diameter GD and V the total volume of the bowl.

12. A method for improving the operating flexibility of a direct-injection internal-combustion engine as claimed in any one of the previous claims, comprising at least one cylinder (1), a piston (5) sliding in this cylinder, gas intake and exhaust means (3, 4), a combustion chamber delimited on one side by the upper face of piston (5) comprising a teat (7) pointing towards cylinder head (2), at the centre of a cup or bowl (8), **characterized in that** it consists:

    - for low and medium loads, in injecting the fuel into each cylinder through an injector with a nappe angle ($a_1$) less than or equal to

    $$2 Arctg \frac{CD}{2F}$$, where CD is the diameter of cylinder (2) and F the distance between the point of origin of the fuel jets from injector (6) and the position of the piston corresponding to a crank angle of 50° to the top dead centre (TDC), so as to obtain a significant mixing time of the fuel with the intake air prior to combustion of this mixture,
    - for high loads, in injecting the fuel through the same injector with the same nappe angle so as to obtain a stratified mixture of fuel and intake air, and progressive combustion.

**FIG.1**

EP 1 217 186 B1

# FIG.2

11

# FIG.3

−15 dv

Figure 4 a

0 dv

Figure 4 b

+15 dv

Figure 4 c

+30 dv

Figure 4 d

+40 dv

Figure 4 e

**EP 1 217 186 B1**

## RÉFÉRENCES CITÉES DANS LA DESCRIPTION

**Documents brevets cités dans la description**

- EP 849448 A
- EP 589178 A
- US 5363820 A
- JP 10184362 B
- JP 10184363 B
- US 3945351 A
- GB 2134181 A
- DD 147386
- US 5906183 A
- US 5373820 A
- EP 661432 A
- DE 3327998